# EUROPÄISCHE PATENTANMELDUNG

(11) **EP 1 615 093 A2**
(43) Veröffentlichungstag der Anmeldung: **11.01.2006**
(21) Anmeldenummer: 05014667.9
(22) Anmeldetag: 06.07.2005
(51) Int. Cl.: G05B 19/418, H04L 12/403

(54) **Verfahren zur Überwachung der Funktion eines Slave in einer Profibus Umgebung**

(30) Priorität: 06.07.2004 DE 102004032687
(71) Anmelder: SIEMENS AKTIENGESELLSCHAFT, 80333 München (DE)
(72) Erfinder: Schäfer, Philipp, 76189 Karlsruhe (DE)

(57) **Zusammenfassung**

Zur Überwachung der Funktion eines Slaves (6) in einem Netzwerk nach der PROFIBUS DP- oder PROFInet I/O-Spezifikation, wobei der Slave (6) in einem zyklischen Datenverkehr mit einem Master (1) von diesem Eingangsdaten erhält und ein in dem Slave (6) enthaltener Treiber die erhaltenen Eingangsdaten zur Abholung für eine Slave-Applikation (4) bereithält, stellt der Treiber (3) die erhaltenen Eingangsdaten, erst nachdem sie von der Slave-Applikation (4) abgeholt worden sind, als Ausgangsdaten bereit und der Master (1) liest diese Ausgangsdaten in einem azyklischen Datenverkehr mit dem Slave (6).

## Beschreibung

PROFIBUS DP ist ein in der europäischen Norm EN 50 170 definierter herstellerunabhängiger, offener Standard für die Kommunikation von Teilnehmern in einem Netzwerk (Feldbus) und auf Automatisierungssysteme mit dezentraler Peripherie zugeschnitten.

PROFInet ist das ethernetbasierte Konzept von PROFIBUS, bei dem die dezentrale Peripherie durch PROFInet I/O unter Verwendung der I/O-Sicht von PROFIBUS DP eingebunden wird.

PROFIBUS DP unterscheidet zwischen aktiven Teilnehmern (Master) und passiven Teilnehmern (Slaves). Die Master bestimmen den Datenverkehr in dem Netzwerk (Bus). Ein Master darf Daten ohne externe Aufforderung aussenden, wenn er im Besitz einer Buszugriffsberechtigung (Token) ist. Innerhalb eines festgelegten Zeitrahmens wird der Token in einem Ring zwischen den Mastern weitergereicht. Der jeweils aktive Master kann die ihm jeweils zugeordneten Slaves nach Art eines Polling zur zyklischen Datenübertragung ansprechen, wobei Daten an die Slaves übermittelt oder von diesen abgeholt werden. PROFIBUS DP unterscheidet ferner zwischen Mastern der Klasse 1 und Mastern der Klasse 2. Einzelne Master können Funktionalitäten beider Klassen 1 und 2 beinhalten. Ein Master Klasse 1 führt die normalen Steuerungsaufgaben in dem Automatisierungssystem aus und kommuniziert aktiv mit den ihm zugeordneten Slaves. Mit einem Master Klasse 2 kann er dagegen nur auf Anforderung hin, also passiv, kommunizieren. Der Master Klasse 2 kann aktiv mit den ihm zugeordneten Slaves sowie mit Mastern Klasse 1 und deren Slaves kommunizieren. Wenn ein Master Klasse 1 den aktuellen Polling-Zyklus beendet hat, gibt er den Token an den Master Klasse 2 weiter, um diesem einen temporären Buszugriff zu ermöglichen. Die bedarfsweise Datenübertragung zwischen dem Master Klasse 2 und dem ihm zugeordneten Slaves erfolgt azyklisch mit niederer Priorität parallel zu dem schnellen zyklischen Datenverkehr.

Die Übertragung von Nutzdaten zwischen einem Master und einem Slave erfolgt durch ein vorgegebenes Telegramm, das aus einem Kopfteil (Header), den Nutzdaten und einem Schlussteil (Trailer) besteht. In dem Header sind unter anderem die Quelladresse (Source Address) und die Zieladresse (Destination Address) für die Nutzdaten angegeben. Beim azyklischen Datenverkehr werden in dem Header zusätzlich Dienstzugangspunkte (Service Access Points, SAP) übertragen, die im Bezug auf die Quell- und Zieladresse angeben, welche Nutzdaten übertragen werden und welche Funktion ausgeübt wird. PROFIBUS DP benutzt die im Folgenden angegebenen Dienstzugangspunkte SAP54 bis SAP62; die schnelle zyklische Datenübertragung erfolgt ohne Dienstzugangspunkt (Default SAP):

| | |
|---|---|
| Default SAP | zyklischer Datenaustausch |
| SAP54 | Master-Master-Kommunikation |
| SAP55 | Ändern der Stationsadresse |
| SAP56 | Lesen der Eingänge |
| SAP57 | Lesen der Ausgänge |
| SAP58 | Steuerkommandos an den DP-Slave |
| SAP59 | Konfigurationsdaten lesen |
| SAP60 | Diagnoseinformationen lesen |
| SAP61 | Parametrierdaten senden |
| SAP62 | Konfigurierdaten prüfen |

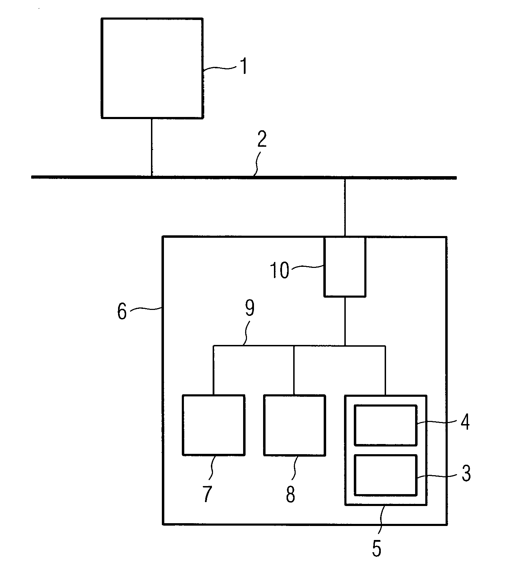

Die Zeichnung zeigt in der einzigen Figur einen Master 1, der über ein Netzwerk (Feldbus) 2 nach der PROFIBUS DP-Spezifikation mit einem Slave kommuniziert. Der Slave umfasst eine Slave-Applikation 3 und einen Treiber 4, die in einem Programmspeicher 5 eines Personal Computers (PC) 6 geladen sind. Der PC 6 enthält ferner einen Prozessor 7 und einen Arbeitsspeicher 8, die zusammen mit dem Programmspeicher 5 über einen internen Bus 9 mit einem Kommunikationsprozessor 10 verbunden sind. Der Kommunikationsprozessor 10 bildet die Schnittstelle zwischen dem PC 6 und dem Feldbus 2 und ist in Form einer Steckkarte an dem PC 6 angesteckt.

Insbesondere bei softwarebasierenden Slaves, die, wie oben gezeigt, auf PCs ablaufen, kann von dem jeweils aktiven Master nicht erkannt werden, ob die Slave-Applikation auf dem PC noch läuft und ob bzw. wie schnell sie ihre von dem Master erhaltenen Eingangsdaten auswertet. Es kann auch nicht erkannt werden, ob alle eingehenden Datenpakete ausgewertet werden oder zum Beispiel nur jedes n-te Datenpaket. Der Master kann lediglich erkennen, ob "der Slave noch im Ring ist", das heißt, ob der Treiber in dem Slave noch den Kommunikationsprozessor anspricht und am Laufen hält. Damit lässt sich aber die Funktion des Slaves nur unzureichend überwachen, da es bei Software-Slaves häufiger vorkommt, dass der Treiber noch aktiv ist und somit der Slave im Ring bleibt, aber die Slave-Applikation schon längst hängt. Bei einer anderen Möglichkeit zur Überwachung der Funktion eines Slaves wird darauf geachtet, ob sich dessen Ausgabedaten ändern, was jedoch nur bei häufigen Änderungen der Ausgabedaten praktikabel ist. Bei Hardware-Slaves kann eine Ausgabeleitung mit einer Eingabeleitung kurzgeschlossen werden, um die Übernahme von eingehenden Daten zu kontrollieren. Schließlich besteht die Möglichkeit, dass der Treiber den Slave veranlasst, den Ring zu verlassen, wenn die Slave-Applikation eine bestimmte Zeit verstreichen lässt, ohne die eingehenden Daten abzuholen; dieses Verfahren funktioniert jedoch nicht bei einem Absturz des PCs.

Der Erfindung liegt daher die Aufgabe zugrunde, eine zuverlässige Überwachung der Funktion eines DP-Slaves, insbesondere eines Software basierenden DP-Slaves zu ermöglichen.

Gemäß der Erfindung wird die Aufgabe gelöst durch ein Verfahren zur Überwachung der Funktion eines Slaves in einem Netzwerk nach der PROFIBUS DP- oder PROFInet I/O-Spezifikation, wobei der Slave in einem zyklischen Datenverkehr mit einem Master von diesem Eingangsdaten erhält und ein in dem Slave enthaltener Treiber die erhaltenen Eingangsdaten zur Abholung für eine Slave-Applikation bereithält und wobei ferner der Treiber die erhaltenen Eingangsdaten erst nachdem sie von der Slave-Applikation abgeholt worden sind, als Ausgangsdaten bereitstellt und der Master diese Ausgangsdaten in einem azyklischen Datenverkehr mit dem Slave liest.

Bei dem erfindungsgemäßen Verfahren wird die Master Klasse 2-Funktionalität des Slaves ausgenutzt, indem der Treiber die Ausgangsdaten auf den Dienstzugangspunkt SAP57 für den Master, hier mit der Master Klasse 2-Funktionalität, erst dann auf den Stand der von dem Master, hier mit der Master Klasse 1-Funktionalität, zyklisch gesendeten Eingangsdaten aktualisiert, nachdem die Slave-Applikation die Eingangsdaten von dem Treiber abgeholt hat, und nicht wie bisher unmittelbar nach Erhalt der Daten. Dadurch kann der Master mit der Master Klasse 2-Funktionalität durch einfaches azyklisches Lesen der Ausgangsdaten auf dem Dienstzugangspunkt SAP57 des Slaves prüfen, ob die Slave-Applikation noch Daten abholt und somit aktiv ist. Wenn sich die Ausgangsdaten nach einer bestimmten Zeit (z. B. Buszyklus) nicht geändert haben, so hat die Slave-Applikation die neuen Eingangsdaten noch nicht gelesen, was bedeutet, dass die Slave-Applikation hängt oder dass sie nicht schnell genug nachkommt, die Eingangsdaten zu lesen. Im letzteren Fall kann die Zeitverzögerung bei der Auswertung der Eingangsdaten in dem Slave ermittelt werden. Liest der Master auf SAP57 nur jedes n-te Datenpaket, so bedeutet dies, dass die Slave-Applikation nicht in der Lage ist, alle Datenpakete auszuwerten.

Die Implementierung des erfindungsgemäßen Verfahrens erfordert in vorteilhafter Weise keine Änderung bei der Slave-Applikation, sondern lediglich ein Update des Treibers.

## Patentansprüche

1. Verfahren zur Überwachung der Funktion eines Slaves in einem Netzwerk nach der PROFIBUS DP- oder PROFInet I/O-Spezifikation, wobei der Slave in einem zyklischen Datenverkehr mit einem Master von diesem Eingangsdaten erhält und ein in dem Slave enthaltener Treiber die erhaltenen Eingangsdaten zur Abholung für eine Slave-Applikation bereithält und wobei ferner der Treiber die erhaltenen Eingangsdaten erst nachdem sie von der Slave-Applikation abgeholt worden sind, als Ausgangsdaten bereitstellt und der Master diese Ausgangsdaten in einem azyklischen Datenverkehr mit dem Slave liest.
